# EUROPEAN PATENT SPECIFICATION

(11) **EP 3 641 248 B1**
(45) Date of publication and mention of the grant of the patent: **10.11.2021**
(21) Application number: 18817347.0
(22) Date of filing: 11.06.2018
(51) Int. Cl.: H04L 12/813, H04L 29/08, H04M 1/725, H04W 76/14, H04W 88/14, H04W 4/60

(54) **TRAFFIC OPTIMIZATION DEVICE, COMMUNICATION SYSTEM, TRAFFIC OPTIMIZATION METHOD, AND PROGRAM**
VERKEHRSOPTIMIERUNGSVORRICHTUNG, KOMMUNIKATIONSSYSTEM, VERKEHRSOPTIMIERUNGSVERFAHREN UND -PROGRAMM
DISPOSITIF D'OPTIMISATION DE TRAFIC, SYSTÈME DE COMMUNICATION, PROCÉDÉ D'OPTIMISATION DE TRAFIC, ET PROGRAMME

(30) Priority: 13.06.2017 JP 2017116119
(43) Date of publication of application: 22.04.2020
(73) Proprietor: NEC Corporation, Tokyo 108-8001 (JP)
(72) Inventor: YAMAMOTO, Keiji, Tokyo 108-8001 (JP)
(74) Representative: Betten & Resch
(86) International application number: PCT/JP2018/022149
(87) International publication number: WO 2018/230482

(56) References cited:
- EP-A1- 3 162 146
- JP-A- 2014 209 674
- JP-A- 2014 514 853
- JP-A- 2015 005 849
- KR-A- 20130 072 734
- US-A1- 2015 103 697

## Description

### FIELD

The present invention relates to a traffic optimization apparatus, a communication system, a traffic optimization method, and a program. More specifically, the invention relates to a traffic optimization apparatus, a communication system, a traffic optimization method, and a program for performing optimization of a traffic that flows through a network.

### BACKGROUND

Smartphones and mobile data communication services have become widespread and use of tethering has expanded. As a method of the tethering, the method of the tethering using Wi-Fi (registered trademark), a USB (Universal Serial Bus), Bluetooth (registered trademark) or the like can be selected. Under such a background, a configuration of using the Internet from a tablet terminal or a personal computer via a smartphone, in particular, has increased.

A communication terminal (such as a smartphone) that is providing a tethering service generates a data traffic having a property (of a timing or an amount) which is different from that in a case where only the communication terminal is used. The difference of this data traffic arises from an application difference, for example. While a data traffic of an application when the smartphone is directly used is mainly for an SNS (Social Networking Service), moving picture viewing, or the like, a tethering using device (such as a laptop personal computer or a tablet terminal) can often generate data transfer for version up of an operating system or a large-amount file. As another cause, a difference of an amount of data at a time of the moving picture viewing due to a difference between the screen size (of the smartphone: about 5 inches) and the screen size of (the tablet: about 10 inches) may also be pointed out.

Accordingly, an increase in a tethering traffic has become a significant target of consideration for a company that provides a data communication service for the smartphone when network design and service design are performed. When the consideration is made, it is essential to make effective use of limited network resources (such as a communication band) of a telecommunications carrier and to provide a fair service (that is appropriate for the price) to a user.

Thus, there is a handling method of permitting or blocking an inflow of the tethering traffic. That is, by charging another charge for the tethering, for example, only the tethering traffic of a user who has paid for the tethering is permitted to pass. This prevents an inflow of the traffic of the tethering outside of contract and avoids frequent occurrence/normalization of a state where a large amount of network resources is consumed by abuse of the tethering.

Each of Patent literatures 1 and 2 discloses an example of a technology whereby the tethering traffic inflow control described above is performed. Patent Literature 1 discloses a communication terminal that can control communication of each of other apparatuses configured to communication-connect to networks, using a tethering function. According to the Literature, this communication terminal provides the tethering function to each of the other apparatuses. Then, it is described that this communication terminal controls permission of the communication according to a control policy stored in a storage part in advance and based on at least one of attribute information, a communication destination, interface type information of a corresponding one of the connected networks of these other apparatuses.

Patent Literature 2 discloses a method for processing a data session to be executed by using a user device that has been tethered in a network. Specifically, in the method described in the Literature, a process of receiving, by a network element, the indicator of the tethered device, which has been originated from a request message from the user device, is performed. Then, a process of detecting this indicator by the network element is performed. Further, based on this indicator, a process of executing one of rejecting the data session requested by the user device or managing the data session requested by the user device is performed.

Patent Literature 3 discloses an identification apparatus that can identify the connection configuration of a terminal apparatus. Specifically, this identification apparatus includes a communication monitoring part 11 configured to acquire information of a communication packet to be monitored and a terminal type acquisition part (such as a communication protocol analysis part 12) configured to acquire information indicating the type of the terminal apparatus that has transmitted the communication packet. This identification apparatus further includes a connection configuration detection part configured to detect the connection configuration of the terminal apparatus, based on a TTL (Time To Live) value included in the information of the communication packet that is acquired by the communication monitoring part 11 and the information indicating the type of the terminal apparatus that is acquired by the terminal type acquisition part.
US 2015/103697 A, KR 2013 0072734 A, and EP 3 162 146 A represent related art.

[PTL 1] International Publication No. WO2014/142299
[PTL 2] JP Patent Kohyo Publication No. JP2011-520383A
[PTL 3] JP Patent Kokai Publication No. JP2014-209674A

### SUMMARY

The following analysis has been given by the present invention. The control of the tethering traffic in each of Patent Literatures 1 and 2 is permission control at a point of the inflow of the traffic. When a user pays the another charge for the tethering, the tethering traffic flows to the side of the network without alteration. Then, the tethering traffic that has flown in is to be handled like a smartphone traffic.

In a network of a telecommunications carrier, optimization of a traffic (such as data compression or transfer speed control) may be performed. In this case as well, a smartphone traffic and a tethering traffic are handled without distinction. Also when optimization control is performed based on charging policy information for each user, which has been obtained from a PCRF (Policy and Charging Rules Function), by cooperation between a traffic optimization apparatus and the PCRF, a policy for each user is applied. That is, there is a problem that after the smartphone traffic and the tethering traffic have flown into the network of the telecommunications carrier, fine optimization in accordance with a traffic characteristic cannot be performed for each of the smartphone traffic and the tethering traffic.

An object of the present invention is to provide a traffic optimization apparatus, a communication system, a traffic optimization method, and a program that can contribute to enrichment of means for performing optimization of a tethering traffic from a viewpoint different from that of the above-mentioned control at the inflow point.

The above object is achieved with the features of the appended independent claims. Dependent claims constitute embodiments of the invention.Although the invention is only defined by the claims, the below embodiments, examples and aspects are only present for the sole purpose in aiding in understanding the background and advantages of the invention.

According to the present invention, it becomes possible to optimize the tethering traffic. That is, the present invention converts the tethering service provision apparatus described in the Background Art to the one in which functional improvement has been achieved in terms of traffic control of the tethering service provision apparatus.

### BRIEF DESCRIPTION OF DRAWINGS

[Fig. 1]

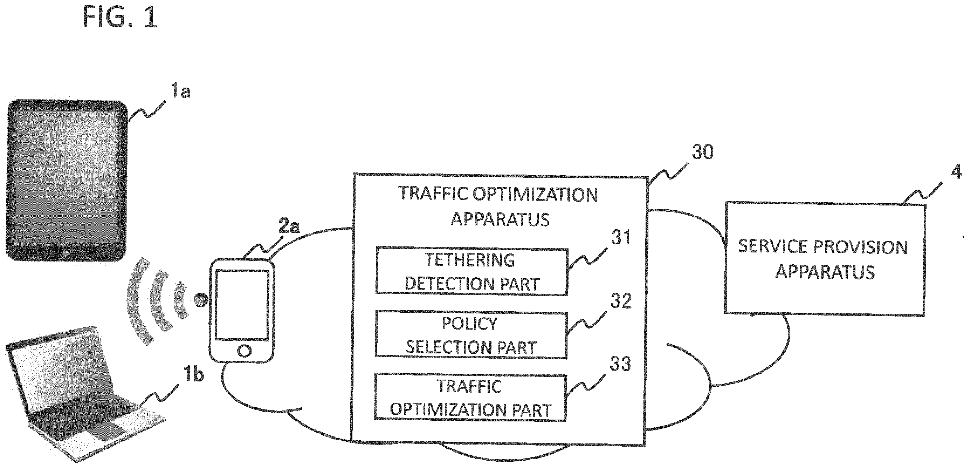

   Fig. 1 is a diagram for describing a configuration of an embodiment of the present invention.
[Fig. 2]

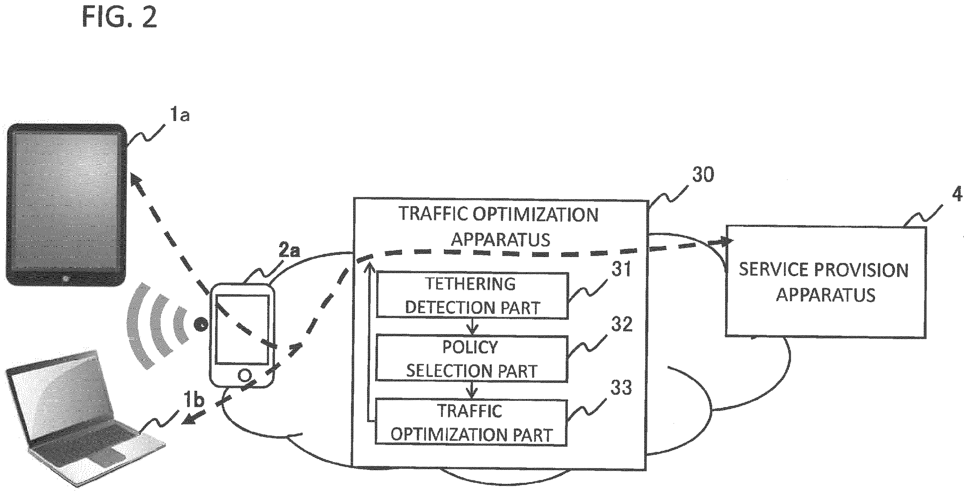

   Fig. 2 is a diagram for explaining operations of the embodiment of the present invention.
[Fig. 3]

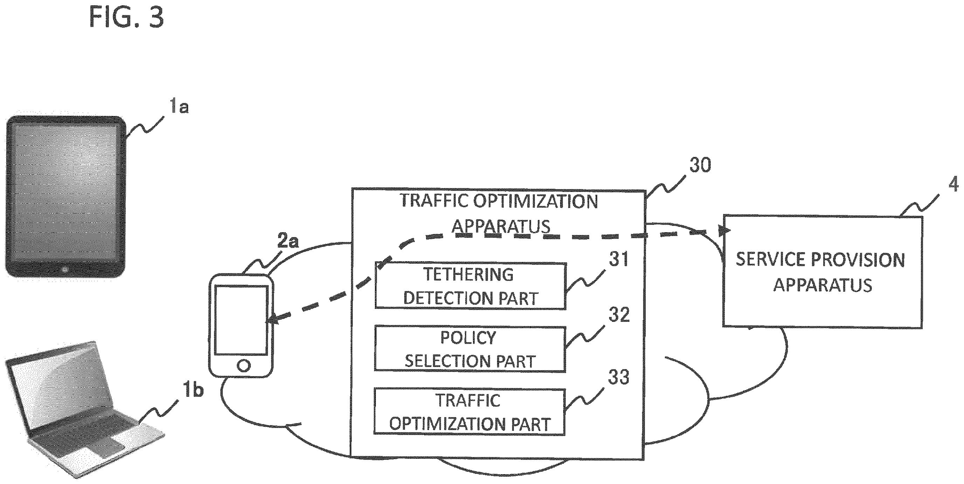

   Fig. 3 is another diagram for explaining operations of the embodiment of the present invention.
[Fig. 4]

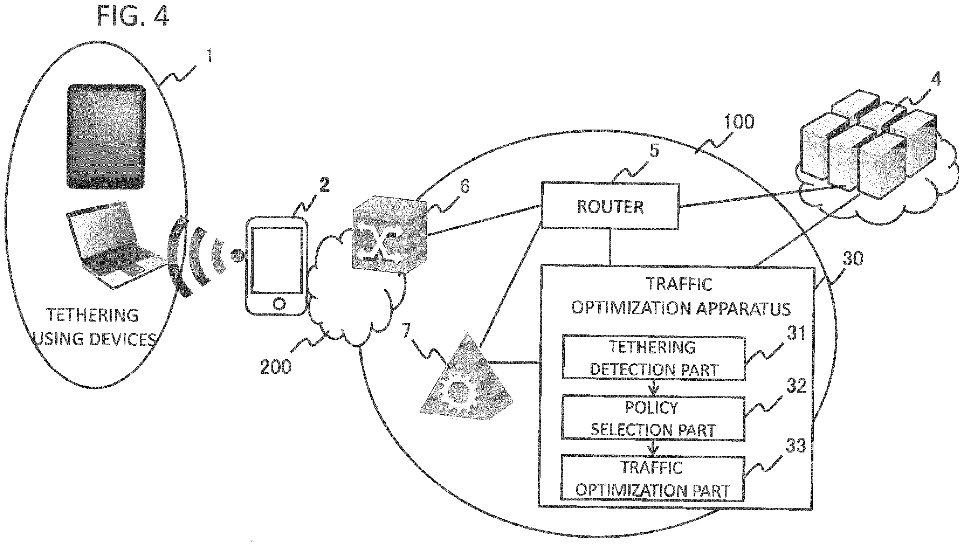

   Fig. 4 is a diagram illustrating a configuration of a first embodiment of the present invention.
[Fig. 5]

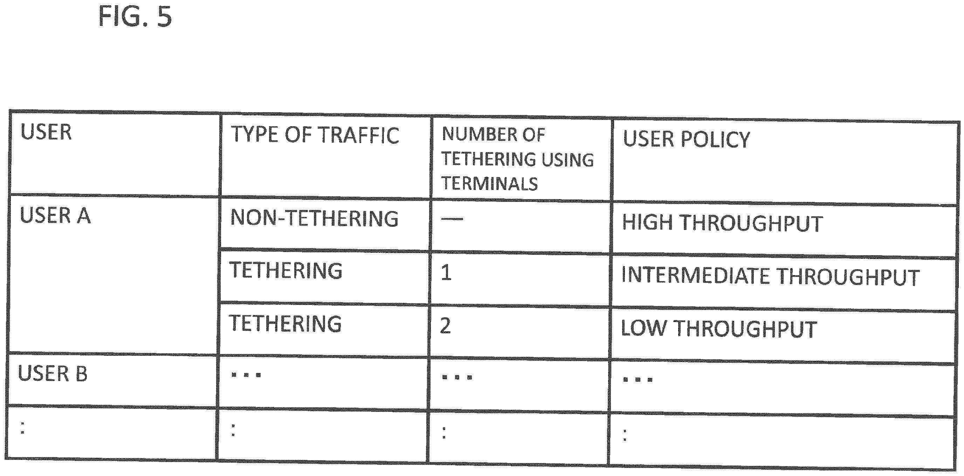

   Fig. 5 is a table illustrating an example of communication policy information that is acquired from a PCRF by a traffic optimization apparatus in the first embodiment of the present invention.
[Fig. 6]

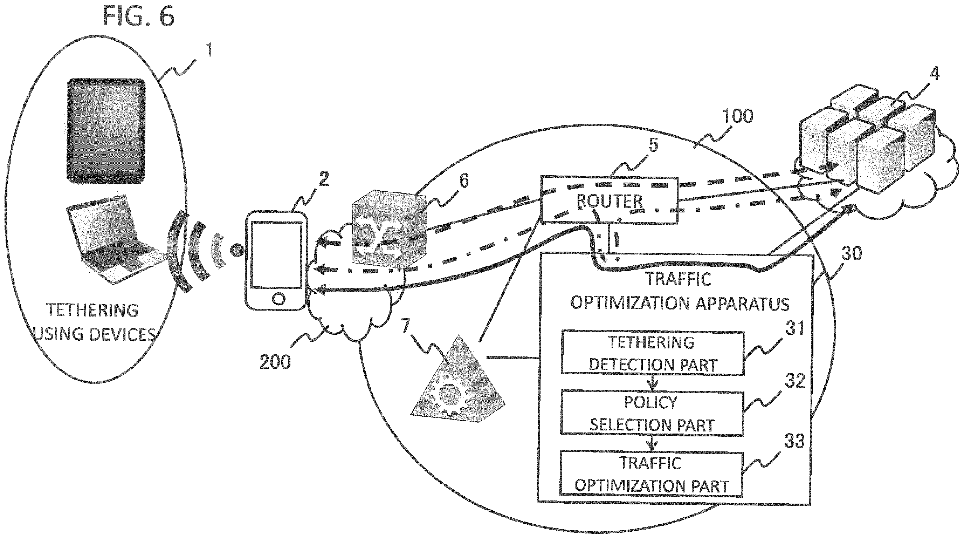

   Fig. 6 is a diagram for explaining traffics to be processed by the apparatus for traffic optimization in the first embodiment of the present invention.
[Fig. 7]

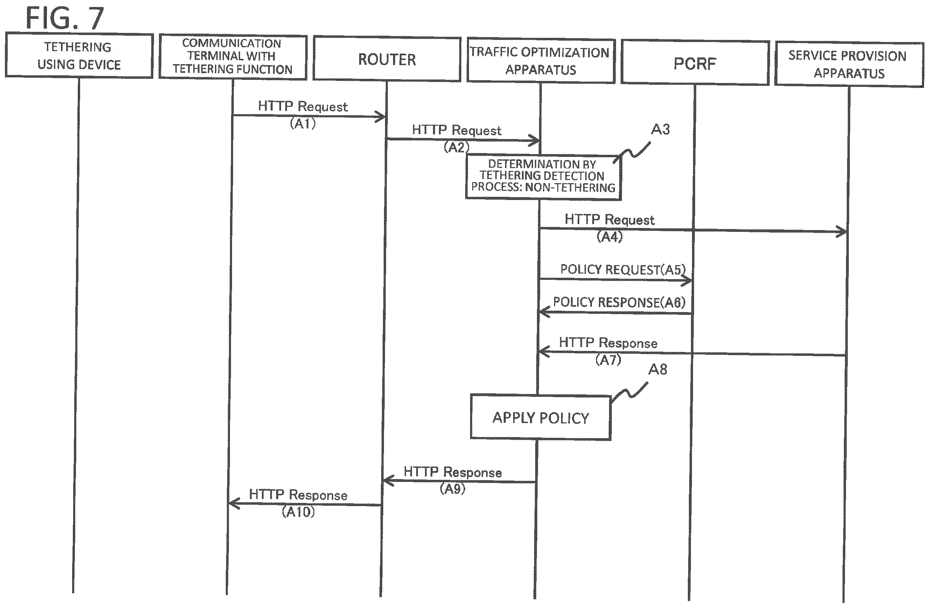

   Fig. 7 is a sequence diagram for explaining operations of the first embodiment of the present invention.
[Fig. 8]

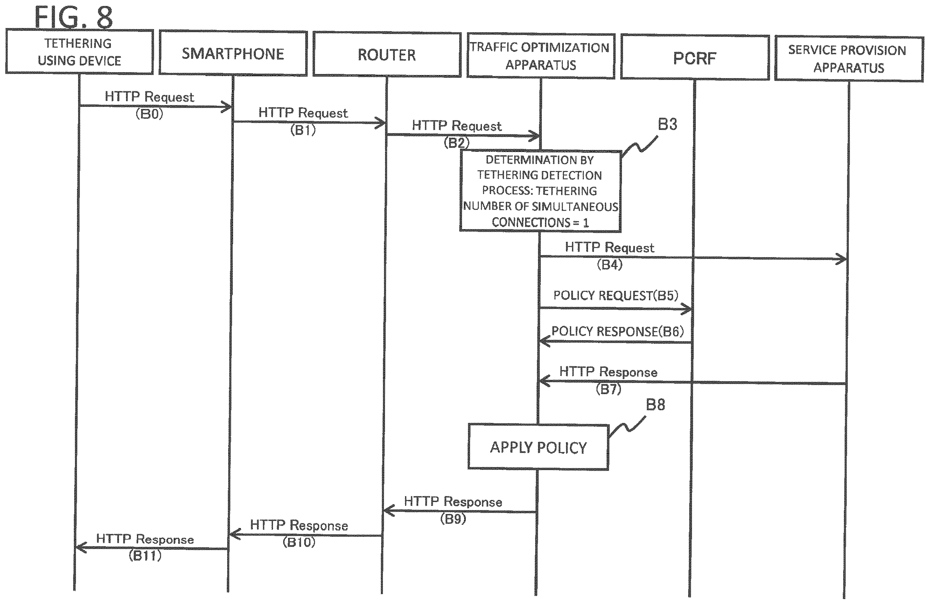

   Fig. 8 is another sequence diagram for explaining operations of the first embodiment of the present invention.
[Fig. 9]

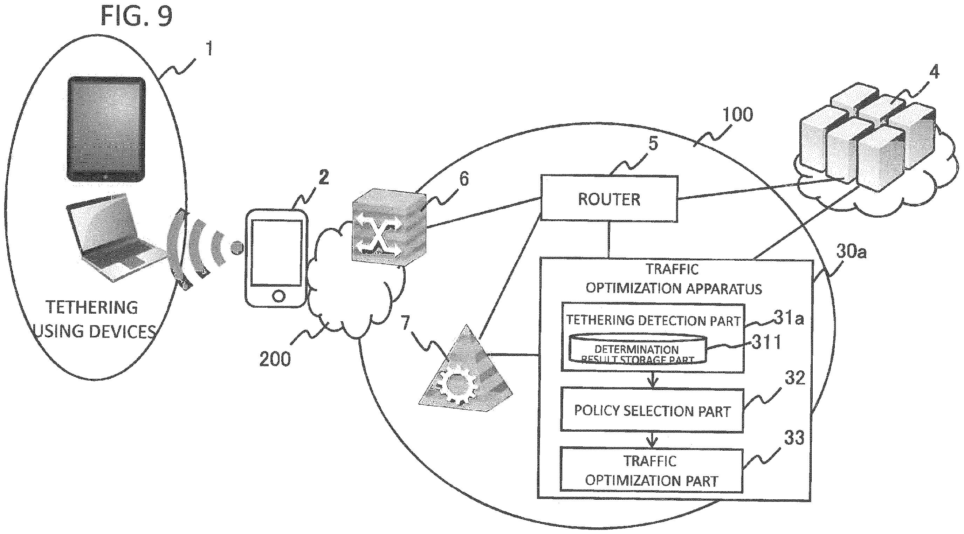

   Fig. 9 is a diagram illustrating a configuration of a second embodiment of the present invention.
[Fig. 10]

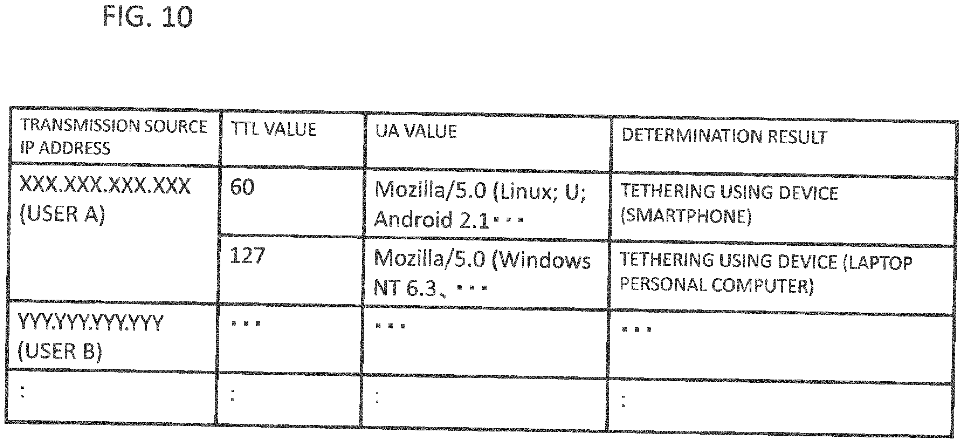

   Fig. 10 is a table for explaining the held state of each result of determination by a traffic optimization apparatus in the second embodiment of the present invention.

### PREFERRED MODES

First, an overview of an embodiment of the present invention will be described with reference to the drawings. A reference numeral in each drawing given in this overview is provided to each element for convenience as an example for helping understanding and does not intend to limit the present invention to the mode that has been illustrated. Also, connection lines between blocks in the drawings or the like that will be referred to in the following description include both bidirectional and unidirectional connection lines. Each one-way arrow schematically illustrates a flow of a main signal (data), and it does not exclude bidirectionality. Though there is a port or an interface at each input/output connection point in each block in each drawing, illustration of them will be omitted.

The embodiment of the present invention can be implemented by a traffic optimization apparatus 30 including a tethering detection part 31, a policy selection part 32, and a traffic optimization part 33, as illustrated in Fig. 1.

More specifically, a communication terminal 2a provides a tethering service to one or more other devices (e.g., 1a and 1b in Fig. 1). The tethering detection part 31 identifies a tethering traffic from each of the one or more other devices via the communication terminal 2a, based on information of the packet header of a packet flowing in a network to which the communication terminal 2a is connected.

As a method of identifying the tethering traffic, a traffic analysis method that is used in a DPI (Deep Packet Inspection) apparatus or the like can be used. It is a method of using that a value in a Time-To-Live (hereinafter "TTL") field of an IP packet is an initial value which is different according to an origination, for example. If there is a variation in the TTL, the traffic can be estimated to the tethering traffic. Alternatively, as the method of identifying the tethering traffic, a different tendency, which is seen between TTL values of IP packets in a traffic when the communication terminal 2a is directly used and the tethering traffic, for example, can also be used. When the TTL value of a packet after having been observed for a certain period is small, the traffic can be estimated to be the tethering traffic. The reason why the TTL value differs in this way is that the number of hops in an IP path for tethering becomes larger than that for a smartphone traffic.

When the tethering traffic is identified, it is necessary to analyze each traffic through the communication terminal 2a that provides a tethering function. The IP address of an IP packet can be used for the identification through the communication terminal 2a. Since the communication terminal 2a operates as a NAT router also when the tethering is performed, an origination becomes the IP address of the communication terminal 2a. Thus, a TTL value is monitored for each communication terminal 2a and is recorded for a certain period as the TTL value of the traffic from the IP address. When an IP packet having a TTL value that is different from this reference value flows in from the same IP address, that flow can be estimated to be the tethering traffic from the communication terminal 2a. This allows identification of the tethering traffic for each communication terminal 2a.

More preferably, by monitoring a value in a Use-Agent (hereinafter "UA") field of an HTTP Request message header, in addition to the TTL value, a plurality of devices that are connected from the same communication terminal 2a using the tethering function can be identified.

The policy selection part 32 selects a communication policy to be applied to the identified tethering traffic.

The traffic optimization part 33 applies, to the tethering traffic, a process associated with the selected communication policy.

It is assumed, for example, that each of a tablet-type terminal 1a and a PC (personal computer) 1b performs communication with a service provision apparatus 4, using the tethering function of the communication terminal 2a, as illustrated in Fig. 2. In this case, the traffic optimization apparatus 30 determines whether or not a traffic between the communication terminal 2a and the service provision apparatus 4 is the tethering traffic, based on information of the packet header of a packet that is communicated between the communication terminal 2a and the service provision apparatus 4.

If it has been determined, as a result of the determination, that the traffic between the communication terminal 2a and the service provision apparatus 4 is the tethering traffic, it means that the tethering traffic from the other device via the communication terminal 2a, could be identified. In this case, the traffic optimization apparatus 30 selects the communication policy to be applied to the identified tethering traffic. The communication policy of applying, to the tethering traffic of this type, a data transfer speed which is lower than that for any other traffic, for example, is selected.

Then, the traffic optimization apparatus 30 applies, to the tethering traffic, the process associated with the selected communication policy.

As a result, the communication policy is applied to the tethering traffic illustrated by a broken line in Fig. 2, for example. This makes it possible to handle the tethering traffic and a traffic other than the tethering traffic in distinction between each other and to perform optimization of the tethering traffic. On the other hand, when the communication terminal 2a does not provide the tethering function, as illustrated in Fig. 3, the traffic is not identified to be the tethering traffic, so that application of the communication policy to be applied to the tethering traffic is not performed. By the above-mentioned processes, the optimization of the tethering traffic is implemented.

Further, when the number of tethering using devices to be connected from the same communication terminal 2a, using the tethering function can be grasped by the monitoring of the UA field or the like, the tethering traffic in which the number of the tethering using devices is equal to or more than a predetermined number can also be made to be a target for the application of the communication policy.

### [First embodiment]

Subsequently, a first embodiment of the present invention will be described in detail, using the drawings. Fig. 4 is a diagram illustrating a configuration of the first embodiment of the present invention. Referring to Fig. 4, the configuration including a smartphone 2 that is connected to a network 100 via a mobile network 200 and one or more tethering using devices 1 configured to use the tethering function of this smartphone 2 is illustrated.

The network 100 is a network of a communications carrier that provides a mobile data communication service to the smartphone 2. In the example in Fig. 4, a router 5, a GGSN/P-GW 6, a PCRF 7, and a traffic optimization apparatus 30 are disposed on the side of the network 100.

Each tethering using device 1 is a terminal configured to be connected to the smartphone 2 by tethering, thereby accessing the Internet, and has a function of wireless or wired tethering connection. As the tethering using device 1 as mentioned above, a tablet terminal, a laptop personal computer, or the like may be mainly pointed out. Besides, as the tethering using device 1, a game terminal, a smartphone without a SIM (Subscriber Identify Module) may be used. As a method for connection to the smartphone 2 by the tethering, Wi-Fi (registered trademark), for example, may be used or a different method (such as a USB (Universal Serial Bus), Bluetooth (registered trademark), or the like) may be used.

The smartphone 2 is a terminal in a state capable of using an Internet access service that is provided by the telecommunications carrier and has the tethering function. In this embodiment, the description will be given, assuming that the smartphone 2 is used. However, a tablet terminal or the like having a mobile data communication function may be used instead of the smartphone 2. The tethering function of the smartphone 2 includes a NAT (Network Address Translation) router function configured to relay an internet access traffic from the tethering using device 1. The UE (User Equipment) of each of the smartphone 2 and the tethering using device 1 can receive, from a service provision apparatus 4, a service that is referred to as an OTT (Over The Top) via the network 100.

The router 5 is disposed in the network 100 and has a function of routing a mobile data communication traffic. The router 5 may be a DPI switch, a layer 3 switch, or the like. Further, control based on a communication policy provided by the PCRF 7 or the like may be performed for any data traffic including the tethering traffic described in the Background Art, in the router 5.

The PCRF 7 is an abbreviation for Policy and Charging Rules Function, is disposed in the network 100, and has a function (corresponding to that of a policy management apparatus) of managing user policies of the mobile data communication service. The user policies that are managed by the PCRF 7 can separately include a policy when the smartphone is used and a policy when the tethering is used or a communication policy for the tethering traffic. Then, the PCRF 7 responds the communication policy of a target user, in response to a policy inquiry request from the traffic optimization apparatus 30 or the like. Further, the PCRF 7 may employ a method where when communication policy content is set or changed, the PCRF 7 voluntarily notifies the set content or the changed content to the traffic optimization apparatus 30 or the like. In this embodiment, the PCRF 7 functions as an apparatus configured to provide, to the traffic optimization apparatus 30, the communication policy for the tethering traffic.

The GGSN/P-GW 6 is a device that is a Gateway GPRS Support Node or a Packet Data Network Gateway, which constitutes a connecting point between the mobile network 200 and the network 100. The GGSN/P-GW 6 performs assignment of an IP (Internet Protocol) address to a device on the side of the mobile network, or the like, for example.

The traffic optimization apparatus 30 includes a tethering detection part 31, a policy selection part 32, and a traffic optimization part 33, is disposed in the network 100, and performs various optimization processes to the mobile data communication traffic.

As illustrated in Fig. 4, the traffic optimization apparatus 30 may be disposed in such a way that each traffic that flows between the service provision apparatus 4 and each of the UEs including the smartphone 2 and the tethering using device 1 is drawn in from the router 5. In this case, it may be so configured that the router 5 performs traffic selection according to a predetermined condition, directs the traffic that has met the condition to the traffic optimization apparatus 30 as an optimization target, and does not direct the traffic (that is a user traffic indicated by a broken line in Fig. 6) that has not met the condition to the traffic optimization apparatus 30 and forwards the traffic to an original destination. With respect to the traffics (that are a user traffic indicated by a dash-dotted line in Fig. 6 and a user traffic indicated by a solid line in Fig. 6), which have been transmitted to the traffic optimization apparatus 30, the traffic optimization apparatus 30 may forward the traffic to the service provision apparatus 4, or may return the traffic to the router 5.

It may also be so configured that the traffic optimization apparatus 30 itself is disposed at the position of the router 5 in Fig. 4. In this case, the traffic optimization apparatus 30 also serves as the router 5, so that the router 5 becomes unnecessary.

The tethering detection part 31 has a function of monitoring each traffic between the service provision apparatus 4 and the smartphone 2 or the tethering using device 1 and determining whether that the traffic is due to the smartphone 2 or the tethering. The tethering detection part 31 also has a function of identifying the number of the tethering using devices 1. A mechanism whereby the tethering detection part 31 identifies the tethering traffic and the number of the devices that uses the tethering traffic will be described later in detail.

The policy selection part 32 communicates with the PCRF 7 and acquires user policy information. More specifically, the policy selection part 32 acquires the communication policy to be applied to the tethering traffic that has been identified by the tethering detection part 31.

Fig. 5 is a table illustrating an example of each communication policy information that is acquired from the PCRF 7 by the traffic optimization apparatus 30 in the first exemplary embodiment of the present invention. In the example in Fig. 5, content of a process (user policy) to be applied to the tethering traffic is defined for each user. In the example in Fig. 5, the content of the process to be applied differs according to the number of the tethering using terminals. To take an example, the user policy to be applied to a same user A differs between a case where the number of the tethering using terminals is one and a case where the number of the tethering using terminals is two. As mentioned above, the information of the user policy to be set in the PCRF 7 in advance may comprise a plurality of types. Besides the information of the user policy illustrated in Fig. 5, the user policy may comprise two types that are a smartphone traffic policy and a tethering traffic policy of a certain user, and three or more types of the tethering traffic policy may be further provided according to the number of simultaneously connecting devices. In the example in Fig. 5, the communication policy is defined for each traffic type. However, the communication policy (user policy) to be applied may be changed according to the contracted service or the payment status of each user. To take an example, the tethering traffic of the user who makes a contract using a high charge plan may be treated to be equivalent to a non-tethering traffic.

A "high throughput" in the user policy in Fig. 5 means control of a throughput of the traffic optimization apparatus 30 so that a predetermined lower limit value is guaranteed for the throughout. A "low throughput" to the applied to the tethering traffic in Fig. 5 means control of the throughput of the traffic optimization apparatus 30 so that the throughput of the traffic optimization apparatus 30 is a lower throughput than the "high throughput". An "intermediate throughput" means a throughput intermediate between the "high throughput" and the "low throughput". Generally, the user policy is defined according to the service policy and the charge plan of a telecommunications carrier. With respect to the user policy to be applied to the tethering traffic, the format and the defined content of the user policy can be adjusted in advance between the PCRF 7 and the traffic optimization apparatus 30. These user policies can also be held by using system setting of the traffic optimization apparatus 30 (such that the name for each policy may just be responded from the PCRF 7 to the traffic optimization apparatus 30). Each user policy may be dynamically changed. To take an example, the "low throughput" of the tethering traffic policy of a certain user, which has been initially set, may be changed to the "high throughput" (according to a change in the contract content of the user). By finely determining each user policy and traffic optimization execution content corresponding to the user policy, a quality of experience appropriate to the charge can be provided.

In the traffic optimization apparatus 30, the traffic optimization part 33 applies an optimization process to the tethering traffic that has been identified by the tethering detection part 31, based on the communication policy acquired by the policy selection part 32.

Each part (processing means) of the traffic optimization apparatus 30 illustrated in Figs. 1 and 4 can also be implemented by a computer program configured to cause a processor mounted on the traffic optimization apparatus 30 to execute each process described above, using hardware of the traffic optimization apparatus 30.

Subsequently, operations of this embodiment will be described in detail with reference to the drawings. Each of Fig. 7 and Fig. 8 is a sequence diagram for explaining the operations of the first embodiment of the present invention. First, with reference to Fig. 7, the description will be given by pointing out an example where the smartphone 2 has transmitted an HTTP (HyperText Transfer Protocol) request by itself.

If the message of the HTTP Request transmitted from the smartphone 2 has reached the traffic optimization apparatus 30 (steps A1 and A2), the tethering detection part 31 of the traffic optimization apparatus 30 determines the type of the traffic (whether the traffic is generated by the smartphone or tethering) (step A3). Herein, since the example where the smartphone 2 has transmitted the HTTP request by itself is pointed out, the tethering detection part 31 determines that the traffic is a smartphone traffic (non-tethering traffic).

In the above-mentioned step A3, the tethering detection part 31 can determine the type of the traffic (whether the traffic is the generated by the smartphone or the tethering) by monitoring a TTL value. More preferably, a configuration can also be employed where the tethering detection part 31 performs monitoring in an HTTP layer, in addition to the monitoring of the TTL value. That is, the tethering detection part 31 restores the HTTP message, and checks a character string in the UA (User Agent) field of the HTTP message. Generally, the UA varies according to the OS or the browser of an originating device. A method of identifying the type of a traffic based on a variation state of these information can be employed. Further, if a new pattern that is different from a combination of an originating IP address and a TTL(and a UA as necessary) has been detected, an increase in the one or more tethering using devices is inferred. That is, the tethering detection part 31 can detect the number (number) of the one or more tethering using devices in accordance with the number of patterns that have been detected.

Subsequently, the traffic optimization part 33 of the traffic optimization apparatus 30 transmits the message of the HTTP Request to the service provision apparatus 4 (step A4). Concurrently with this transmission, the policy selection part 32 of the traffic optimization apparatus 30 transmits a policy request to the PCRF 7 with the IP address of the smartphone 2 used as key information if the policy selection part 32 does not hold communication policy information of the user of the smartphone 2.

If the PCRF 7 has received the policy request from the traffic optimization apparatus 30, the PCRF 7 identifies the user to which the specified IP address has been assigned at that point, and returns, to the traffic optimization apparatus 30, a result obtained by retrieving the communication policy information that is set for that user, as a policy response (step A6). If these communications for the policy request and the policy response for acquiring user policy information of the smartphone 2 have already been performed in advance and the information of the user policy is stored in the traffic optimization apparatus 30 (and is regarded to be valid), the communication for the policy request from the traffic optimization apparatus 30 to the PCRF 7 may be omitted.

Thereafter, if the traffic optimization apparatus 30 receives an HTTP Response message from the service provision apparatus 4 (step A7), the traffic optimization apparatus 30 performs an optimization process for the traffic, according to the communication policy for the smartphone for the user that has been acquired before from the PCRF 7 (step A8).

Then, an HTTP Response after the optimization is transmitted to the smartphone 2 via the router 5 (steps A9 and A10).

Subsequently, with reference to Fig. 8, the description will be given by pointing out an example where the tethering using device 1 has transmitted an HTTP (HyperText Transfer Protocol) request via the smartphone 2. As illustrated in Fig. 8, the HTTP request that has been transmitted from the tethering using device 1 is relayed by the smartphone 2 (steps B0 and B1) by tethering, and is further forwarded to the traffic optimization apparatus 30 by the router 5 (step B2).

Though a flow of processes (from step B3 to step B9) where the traffic optimization apparatus 30 transmits an HTTP Response after the traffic optimization apparatus 30 has received the HTTP request is the same as that in the case of the smartphone traffic (from step A3 to A9 in Fig. 2) described above, the following respects are different.

Namely, the different respects are that in step B3, the tethering detection part 31 detects a tethering traffic and determines the number of simultaneously connecting tethering using devices (= 1) and that in step B8, the traffic optimization part 33 applies a traffic optimization process according to the communication policy for the tethering traffic.

When the policies that are different according to the number of simultaneous connections of the tethering using devices 1 are given when the traffic optimization part 33 applies the optimization process in step B8, selection of the policy to be applied is performed, based on the number of the simultaneous connections determined by the tethering detection part 31 in step B3.

Thereafter, similar processes to those in Fig. 7 are performed. The HTTP Response transmitted by the traffic optimization apparatus 30 is forwarded to the smartphone 2 by the router 5 (step B10) and is then returned to the tethering using device 1 by being further relayed by the smartphone 2 (step B11).

As mentioned above, in this embodiment, a plurality of the devices to be tethered from the same UE are identified when the tethering traffic is detected, based on a TTL value in an IP packet header and a value in the User-Agent field of an HTTP Request message header. This makes it possible to apply the optimization process according to the number of the simultaneous connections to the smartphone 2 as well as to determine whether or not the traffic is the tethering traffic. A time limit (time-out value) may be provided for the period of applying the communication policy by the traffic optimization part 33 described above. This makes it possible to also employ an operation of omitting detection of completion of the tethering traffic and a change in the number of the tethering using devices and regarding the communication to be ended when a time-out occurs.

### [Second Embodiment]

Subsequently, a description will be given about a second embodiment of the present invention which has enabled an optimization process to be performed also for a tethering traffic other than that using an HTTP, in detail, with reference to the drawings. Fig. 9 is a diagram illustrating a configuration of the second embodiment. A configuration difference from the first embodiment illustrated in Fig. 4 is that a determination result storage part 311 is provided at a tethering detection part 31a of a traffic optimization apparatus 30a.

The tethering detection part 31a in this embodiment records each of results of estimations and identifications of a smartphone traffic and a traffic (or a tethering traffic) other than the smartphone traffic in the determination result storage part 311, as device identification information, for a predetermined period. Then, the tethering detection part 31a in this embodiment uses the device identification information on the tethering traffic thus recorded in order to identify one or more tethering using devices 1.

Fig. 10 is a table for explaining the held state of each result of a determination by the traffic optimization apparatus 30a in this embodiment. In the example in Fig. 10, the IP address of an origination, a TTL value, a UA value, and the result of the determination about a traffic are held when the type of the traffic is determined by the same method as that in the first embodiment.

After an HTTP Request header has been checked by the method described in the first embodiment and information in a UA filed has been confirmed, the information in that UA may be determined to have a one-to-one correspondence relationship with a specific TTL value. On the other hand, there are some IP packets, among IP packets that flow into the traffic optimization apparatus 30a from a UE, which include HTTP Request headers in their payload portions, and the other packets which do not include the HTTP Request headers. In this embodiment, the tethering detection part 31a can determine, among the IP packets that have subsequently flown in from a same originating IP address, the IP packet having the specific TTL value to be the one matching the device identification information that has been already recorded in the determination result storage part 311. This makes it possible to determine the type of the traffic without waiting for restoration of an HTTP message in this embodiment. In this embodiment, the result of the determination obtained with reference to the determination result storage part 311 can be applied to an IP packet of a communication using a protocol other than the HTTP (e.g., a concealed HTTPS (Hypertext Transfer Protocol Secure) communication or a communication using a UDP (User Datagram Protocol)) as well.

Since the other configurations and operations are the same as those in the first embodiment, a description of the other configurations and operations will be omitted. As described above, according to this embodiment, restoration processes of HTTP messages can be partly omitted, and a traffic other than that using the HTTP can be made to be a control target.

Though the above description has been given about each embodiment of the present invention, the present invention is not limited to the above-mentioned embodiments, and a further variation, a further substitution, and a further adjustment may be made within the scope not departing from the basic technical concept of the present invention. To take an example, the network configuration, the configuration of each element, and the expression form of each message illustrated in each drawing are an example for helping understanding of the present invention, and the present invention is not limited to the configurations illustrated in these drawings.

To take an example, in each of the above-mentioned embodiments, the description has been given, assuming that the traffic optimization apparatus 30 (30a) acquires, from the PCRF 7, the communication policy to be applied to the tethering traffic. It may be, however, so configured that the communication policy is acquired from a component other than the PCRF 7. It may be so configured, for example, that the communication policy information is held in the traffic optimization apparatus 30 (30a) itself or a different apparatus and a communication policy configured to automatically reduce a tethering traffic may be set in a time zone in which the network 100 readily becomes congested. Naturally, a configuration where a network manager rewrites at any time the communication policy information can be employed.

In the above-mentioned exemplary embodiment, the description has been given by pointing out the example of each of the "high throughput" to the low "throughput", as process content to be applied as each communication policy. However, different process content may be naturally defined. A communication policy of applying to a tethering traffic a compression rate which is higher than that for any other traffic, for example, may be set. Alternatively, a process of dropping a packet belonging to a specific tethering traffic, restricting a connection destination site, or the like, for example, may be performed according to the charging condition of a user or the like.

The present invention naturally includes various variations and modifications that could be made by those skilled in the art as long as they do not depart from the scope of the invention as it is depicted by the appended claims. With respect to a numerical value range described herein in particular, an arbitrary numerical value and a small range included in the numerical value range should be construed to be specifically described even unless otherwise explicitly described.

### REFERENCE SIGNS LIST

- 1: tethering using device
- 1a: tablet-type terminal
- 1b: PC (personal computer)
- 2: smartphone
- 2a: communication terminal
- 4: service provision apparatus
- 5: router
- 6: GGSN/P-GW
- 7: PCRF
- 30, 30a: traffic optimization apparatus
- 31, 31a: tethering detection part
- 32: policy selection part
- 33: traffic optimization part
- 100: network
- 200: mobile network
- 311: determination result storage part

## Claims

1. A traffic optimization apparatus comprising:
a tethering detection part (31; 31a) configured to identify, based on packet header information of a packet flowing in a network to which a communication terminal configured to provide a tethering service to one or more other devices is connected, a tethering traffic from each of the one or more other devices via the communication terminal;
a policy selection part (32) configured to select a communication policy to be applied to the identified tethering traffic; and
a traffic optimization part (33) configured to apply, to the tethering traffic, a process associated with the selected communication policy, **characterized by**
wherein the tethering detection part (31; 31a) determines a number of the one or more other devices that are connected via the communication terminal, based on a
Time To Live, TTL, value variation in an Internet Protocol, IP, packet header and a User-Agent value in an HyperText Transfer Protocol, HTTP, message header, wherein a value in a Time-To-Live ,TTL, field of an IP packet is an initial value which is different according to an origination, and identifies the tethering traffic in which the number of the one or more other devices is equal to or more than a predetermined number, and
wherein the tethering detection part (31; 31a) holds the TTL value variation in the IP packet header and the User-Agent value in the HTTP message header for a predetermined period and determines the number of the one or more other devices that are connected via the communication terminal, based on information held for the predetermined period.

2. The traffic optimization apparatus according to claim 1, wherein
the policy selection part (32) selects the communication policy corresponding to the number of the one or more other devices that are connected to the communication terminal.

3. The traffic optimization apparatus according to claim 1 or 2, wherein
the tethering detection part (31a) holds an originating IP address in the IP packet header and a result of identifying for a predetermined period, and determines a traffic type, based on information held for the predetermined period.

4. The traffic optimization apparatus according to any one of claims 1 to 3, wherein
as the communication policy, process content of restricting a transfer speed of the tethering traffic to a transfer speed that is lower than a transfer speed of any other traffic is set.

5. The traffic optimization apparatus according to any one of claims 1 to 4, wherein
as the communication policy, process content of applying, to the tethering traffic, a compression rate that is higher than a compression rate of the any other traffic is set.

6. A communication system comprising:
the traffic optimization apparatus according to any one of claims 1 to 5; and
a policy management apparatus configured to provide, to the traffic optimization apparatus, the communication policy to be applied to the identified tethering traffic.

7. A traffic optimization method comprising the steps of:
identifying, based on packet header information of a packet flowing in a network to which a communication terminal configured to provide a tethering service to one or more other devices is connected, a tethering traffic by each of the one or more other devices via the communication terminal;
selecting a communication policy to be applied to the identified tethering traffic;
applying, to the tethering traffic, a process associated with the selected communication policy; **characterized by**
determining a number of the one or more other devices that are connected via the communication terminal, based on a Time To Live, TTL, value variation in an Internet Protocol, IP, packet header and a User-Agent value in an HyperText Transfer Protocol, HTTP, message header wherein a value in a Time-To-Live ,TTL, field of an IP packet is an initial value which is different according to an origination,
identifying the tethering traffic in which the number of the one or more other devices is equal to or more than a predetermined number;
holding the TTL value variation in the IP packet header and the User-Agent value in the HTTP message header for a predetermined period; and
determining the number of the one or more other devices that are connected via the communication terminal, based on information held for the predetermined period.

8. The traffic optimization method according to claim 7, comprising:
selecting the communication policy corresponding to the number of the one or more other devices that are connected to the communication terminal.

9. The traffic optimization method according to claim 7 or 8, comprising:
holding an originating IP address in the IP packet header and a result of identifying for a predetermined period; and
determining a traffic type, based on information held for the predetermined period.

10. The communication method according to any one of claims 7 to 9, wherein
setting process content of restricting a transfer speed of the tethering traffic to a transfer speed that is lower than a transfer speed of any other traffic as the communication policy.

11. A program for a computer disposed in a network to which a communication terminal configured to provide a tethering service to one or more other devices is connected, the program causing the computer to execute the processes defined by the steps according to any one of claims 7 to 10.

## Patentansprüche

1. Verkehrsoptimierungsvorrichtung, umfassend:
einen Tethering-Erkennungsteil (31; 31a), der konfiguriert ist, um basierend auf Paketheader-Information eines Pakets, das in einem Netzwerk fließt, mit welchem ein Kommunikations-Endgerät verbunden ist, das konfiguriert ist, um einem oder mehreren anderen Geräten einen Tethering-Dienst zur Verfügung zu stellen, einen Tethering-Verkehr von jedem des einen oder der mehreren anderen Geräte über das Kommunikations-Endgerät zu identifizieren;
einen Politik-Auswahlteil (32), der konfiguriert ist, um eine auf den identifizierten Tethering-Verkehr anzuwendende Kommunikationspolitik auszuwählen; und
einen Verkehrsoptimierungsteil (33), der konfiguriert ist, um auf den Tethering-Verkehr einen mit der ausgewählten Kommunikationspolitik assoziierten Prozess anzuwenden, **gekennzeichnet dadurch**
**dass** der Tethering-Erkennungsteil (31; 31a) eine Anzahl des einen oder der mehreren anderen Geräte, die über das Kommunikations-Endgerät verbunden sind, basierend auf einer Time-To-Live-, TTL-, Wertvariation in einem Internetprotokoll-, IP-, Paketheader und einem User-Agent-Wert in einem Hypertext-Übertragungsprotokoll-, HTTP-, Nachrichtenheader bestimmt, wobei ein Wert in einem Time-To-Live-, TTL-, Feld eines IP-Pakets ein Anfangswert ist, der gemäß einem Ursprung unterschiedlich ist, und den Tethering-Verkehr identifiziert, bei welchem die Anzahl des einen oder der mehreren anderen Geräte gleich einer vorbestimmten Zahl oder größer als diese ist, und
wobei der Tethering-Erkennungsteil (31; 31a) die TTL-Wertvariation im IP-Paketheader und den User-Agent-Wert im HTTP-Nachrichtenheader für eine vorbestimmte Periode hält und die Anzahl des einen oder der mehreren anderen Geräte, die über das Kommunikations-Endgerät verbunden sind, basierend auf Information bestimmt, die für die vorbestimmte Periode gehalten ist.

2. Verkehrsoptimierungsvorrichtung nach Anspruch 1, wobei
der Politik-Auswahlteil (32) die Kommunikationspolitik entsprechend der Anzahl des einen oder der mehreren anderen Geräte auswählt, die mit dem Kommunikations-Endgerät verbunden sind.

3. Verkehrsoptimierungsvorrichtung nach Anspruch 1 oder 2, wobei
der Tethering-Erkennungsteil (31a) eine ursprüngliche IP-Adresse im IP-Paketheader und ein Ergebnis eines Identifizierens für eine vorbestimmte Periode hält und einen Verkehrstyp basierend auf Information bestimmt, die für die vorbestimmte Periode gehalten ist.

4. Verkehrsoptimierungsvorrichtung nach einem der Ansprüche 1 bis 3, wobei
als die Kommunikationspolitik ein Prozessinhalt eines Beschränkens einer Übertragungsgeschwindigkeit des Tethering-Verkehrs auf eine Übertragungsgeschwindigkeit eingestellt ist, die niedriger als eine Übertragungsgeschwindigkeit eines beliebigen anderen Verkehrs ist.

5. Verkehrsoptimierungsvorrichtung nach einem der Ansprüche 1 bis 4, wobei
als die Kommunikationspolitik ein Prozessinhalt eines Anwendens einer Kompressionsrate auf den Tethering-Verkehr eingestellt ist, die höher als eine Kompressionsrate des beliebigen anderen Verkehrs ist.

6. Kommunikationssystem, umfassend:
die Verkehrsoptimierungsvorrichtung nach einem der Ansprüche 1 bis 5; und
eine Politik-Managementvorrichtung, die konfiguriert ist, um der Verkehrsoptimierungsvorrichtung die auf den zu identifizierenden Tethering-Verkehr anzuwendende Kommunikationspolitik zur Verfügung zu stellen.

7. Verkehrsoptimierungsverfahren, das die folgenden Schritte umfasst:
Identifizieren, basierend auf Paketheader-Information eines Pakets, das in einem Netzwerk fließt, mit welchem ein Kommunikations-Endgerät verbunden ist, das konfiguriert ist, um einem oder mehreren anderen Geräten einen Tethering-Dienst zur Verfügung zu stellen, eines Tethering-Verkehrs durch jedes des einen oder der mehreren anderen Geräte über das Kommunikations-Endgerät;
Auswählen einer auf den identifizierten Tethering-Verkehr anzuwendenden Kommunikationspolitik;
Anwenden eines mit der ausgewählten Kommunikationspolitik assoziierten Prozesses auf den Tethering-Verkehr, **gekennzeichnet durch**
Bestimmen einer Anzahl des einen oder der mehreren anderen Geräte, die über das Kommunikations-Endgerät verbunden sind, basierend auf einer Time-To-Live-, TTL-, Wertvariation in einem Internetprotokoll-, IP-, Paket-header und einem User-Agent-Wert in einem Hypertext-Übertragungsprotokoll-, HTTP-, Nachrichtenheader, wobei ein Wert in einem Time-To-Live-, TTL-, Feld eines IP-Pakets ein Anfangswert ist, der gemäß einem Ursprung unterschiedlich ist,
Identifizieren des Tethering-Verkehrs, bei welchem die Anzahl des einen oder der mehreren anderen Geräte gleich einer vorbestimmten Zahl oder größer als diese ist;
Halten der TTL-Wertvariation im IP-Paketheader und des User-Agent-Werts im HTTP-Nachrichtenheader für eine vorbestimmte Periode; und
Bestimmen der Anzahl des einen oder der mehreren anderen Geräte, die über das Kommunikations-Endgerät verbunden sind, basierend auf Information, die für die vorbestimmte Periode gehalten ist.

8. Verkehrsoptimierungsverfahren nach Anspruch 7, umfassend:
Auswählen der Kommunikationspolitik entsprechend der Anzahl des einen oder der mehreren anderen Geräte, die mit dem Kommunikations-Endgerät verbunden sind.

9. Verkehrsoptimierungsverfahren nach Anspruch 7 oder 8, umfassend:
Halten einer ursprünglichen IP-Adresse im IP-Paketheader und eines Ergebnisses eines Identifizierens für eine vorbestimmte Periode; und
Bestimmen eines Verkehrstyps basierend auf Information, die für die vorbestimmte Periode gehalten ist.

10. Kommunikationsverfahren nach einem der Ansprüche 7 bis 9, wobei
ein Einstellen eines Prozessinhalts eines Beschränkens einer Übertragungsgeschwindigkeit des Tethering-Verkehrs auf eine Übertragungsgeschwindigkeit, die niedriger als eine Übertragungsgeschwindigkeit eines beliebigen anderen Verkehrs ist, als die Kommunikationspolitik erfolgt.

11. Programm für einen Computer, der in einem Netzwerk angeordnet ist, mit welchem ein Kommunikations-Endgerät verbunden ist, das konfiguriert ist, um einem oder mehreren anderen Geräten einen Tethering-Dienst zur Verfügung zu stellen, wobei das Programm veranlasst, dass der Computer die durch die Schritte gemäß einem der Ansprüche 7 bis 10 definierten Prozesse ausführt.

## Revendications

1. Appareil d'optimisation de trafic comprenant :
une partie de détection de fonction modem (31 ; 31a) configurée pour identifier, d'après des informations d'en-tête de paquet d'un paquet circulant dans un réseau auquel est connecté un terminal de communication configuré pour fournir un service de fonction modem à un ou plusieurs autres dispositifs, un trafic de fonction modem depuis chacun des un ou plusieurs autres dispositifs via le terminal de communication ;
une partie de sélection de politique (32) configurée pour sélectionner une politique de communication à appliquer au trafic de fonction modem identifié ; et
une partie d'optimisation de trafic (33) configurée pour appliquer, au trafic de fonction modem, un processus associé à la politique de communication sélectionnée, **caractérisé en ce que**
dans lequel la partie de détection de fonction modem (31; 31a) détermine un nombre des un ou plusieurs autres dispositifs qui sont connectés via le terminal de communication, d'après une variation de valeur de durée de vie, TTL, dans un en-tête de paquet de protocole Internet, IP, et une valeur d'agent utilisateur dans un en-tête de message de protocole de transfert hypertexte, HTTP, dans lequel une valeur dans un champ de durée de vie, TTL, d'un paquet IP est une valeur initiale qui est différente selon une origine,
et identifie le trafic de fonction modem dans lequel le nombre des un ou plusieurs autres dispositifs est supérieur ou égal à un nombre prédéterminé, et
dans lequel la partie de détection de fonction modem (31; 31a) conserve la variation de valeur TTL dans l'en-tête de paquet IP et la valeur d'agent utilisateur dans l'en-tête de message HTTP pendant une période prédéterminée et détermine le nombre des un ou plusieurs autres dispositifs qui sont connectés via le terminal de communication, d'après des informations conservées pendant la période prédéterminée.

2. Appareil d'optimisation de trafic selon la revendication 1, dans lequel
la partie de sélection de politique (32) sélectionne la politique de communication correspondant au nombre des un ou plusieurs autres dispositifs qui sont connectés au terminal de communication.

3. Appareil d'optimisation de trafic selon la revendication 1 ou 2, dans lequel
la partie de détection de fonction modem (31a) conserve une adresse IP d'origine dans l'en-tête de paquet IP et un résultat d'identification pendant une période prédéterminée, et détermine un type de trafic, d'après des informations conservées pendant la période prédéterminée.

4. Appareil d'optimisation de trafic selon l'une quelconque des revendications 1 à 3, dans lequel
en tant que politique de communication, un contenu de processus consistant à restreindre une vitesse de transfert du trafic de fonction modem à une vitesse de transfert qui est inférieure à une vitesse de transfert de tout autre trafic est établi.

5. Appareil d'optimisation de trafic selon l'une quelconque des revendications 1 à 4, dans lequel
en tant que politique de communication, un contenu de processus consistant à appliquer, au trafic de fonction modem, un taux de compression qui est plus élevé qu'un taux de compression du tout autre trafic est établi.

6. Système de communication comprenant :
l'appareil d'optimisation de trafic selon l'une quelconque des revendications 1 à 5 ; et
un appareil de gestion de politique configuré pour fournir, à l'appareil d'optimisation de trafic, la politique de communication à appliquer au trafic de fonction modem identifié.

7. Procédé d'optimisation de trafic comprenant les étapes de :
identification, d'après des informations d'en-tête de paquet d'un paquet circulant dans un réseau auquel est connecté un terminal de communication configuré pour fournir un service de fonction modem à un ou plusieurs autres dispositifs, un trafic de fonction modem par chacun des un ou plusieurs autres dispositifs via le terminal de communication ;
sélection d'une politique de communication à appliquer au trafic de fonction modem identifié ;
application, au trafic de fonction modem, d'un processus associé à la politique de communication sélectionnée ; **caractérisé par**
la détermination d'un nombre des un ou plusieurs autres dispositifs qui sont connectés via le terminal de communication, d'après une variation de valeur de durée de vie, TTL, dans un en-tête de paquet de protocole Internet, IP, et une valeur d'agent utilisateur dans un en-tête de message de protocole de transfert hypertexte, HTTP, dans lequel une valeur dans un champ de durée de vie, TTL, d'un paquet IP est une valeur initiale qui est différente selon une origine,
l'identification du trafic de fonction modem dans lequel le nombre des un ou plusieurs autres dispositifs est supérieur ou égal à un nombre prédéterminé ;
la conservation de la variation de valeur TTL dans l'en-tête de paquet IP et de la valeur d'agent utilisateur dans l'en-tête de message HTTP pendant une période prédéterminée ; et
la détermination du nombre des un ou plusieurs autres dispositifs qui sont connectés via le terminal de communication, d'après des informations conservées pendant la période prédéterminée.

8. Procédé d'optimisation de trafic selon la revendication 7, comprenant :
la sélection de la politique de communication correspondant au nombre des un ou plusieurs autres dispositifs qui sont connectés au terminal de communication.

9. Procédé d'optimisation de trafic selon la revendication 7 ou 8, comprenant :
la conservation d'une adresse IP d'origine dans l'en-tête de paquet IP et d'un résultat d'identification pendant une période prédéterminée ; et
la détermination d'un type de trafic, d'après des informations conservées pendant la période prédéterminée.

10. Procédé de communication selon l'une quelconque des revendications 7 à 9, dans lequel
l'établissement d'un contenu de processus consistant à restreindre une vitesse de transfert du trafic de fonction modem à une vitesse de transfert qui est inférieure à une vitesse de transfert de tout autre trafic en tant que politique de communication.

11. Programme pour un ordinateur disposé dans un réseau auquel est connecté un terminal de communication configuré pour fournir un service de fonction modem à un ou plusieurs autres dispositifs, le programme amenant l'ordinateur à exécuter les processus définis par les étapes selon l'une quelconque des revendications 7 à 10.
